# EUROPEAN PATENT SPECIFICATION

(11) **EP 3 266 677 B1**
(45) Date of publication and mention of the grant of the patent: **17.04.2019**
(21) Application number: 17176221.4
(22) Date of filing: 15.06.2017
(51) Int. Cl.: B62D 5/083, B62D 5/097

(54) **ROTARY VALVE FOR HYDRAULIC POSSER-ASSISTED STEERING**
DREHSCHIEBERVENTIL FÜR HYDRAULISCHE SERVOLENKUNG
VANNE À TIROIR ROTATIF POUR DIRECTION ASSISTÉE HYDRAULIQUE

(30) Priority: 06.07.2016 IT 201600070291
(43) Date of publication of application: 10.01.2018
(73) Proprietor: OGNIBENE POWER S.P.A., 42124 Frazione Mancasale (RE) (IT)
(72) Inventor: OGNIBENE, Claudio, 42121 Frazione Mancasale (RE) (IT)
(74) Representative: Corradini, Corrado

(56) References cited:
- WO-A1-99/10217
- JP-A- 2002 087 302

## Description

### TECHNICAL FIELD

The invention relates to a rotary distributor for hydraulic power-assisted steering, in particular open-centre rotary distributors.

### PRIOR ART

Hydraulic steering devices, as is known, are used on transport and work vehicles for reducing the effort that the driver has to apply on a steering wheel for commanding the steering of the wheels of the vehicle.

These hydraulic steering devices comprise a pump able to pressurise a working fluid, usually oil, and a hydraulic actuator, generally realised by a double-acting hydraulic cylinder, able to act on a steering mechanism of the vehicle in order to orientate the wheels in the desired direction.

The hydraulic actuator is supplied via a distributor, which is commanded by the steering wheel on which the driver acts.

The distributor can assume three working positions, in one of which, known as the neutral position, the pressurised fluid coming from the pump is directly discharged to the pump tank, while in each of the other two, i.e. the steering positions, the pressurised fluid is sent to the hydraulic actuator which commands the steering in one direction or in the opposite direction.

These open-centre rotary distributors comprise a housing internally of which two sealingly coupled cylindrical bodies are housed.

The more internal cylindrical body, generally known as a spool, is rigidly associated in rotation to the steering wheel and is axially hollow, while the more external cylindrical body, usually called a liner, is connected to the spool by elastic means for small rotations and by rigid means for larger rotations.

The spool and the liner are provided with a series of openings that, when the distributor is in the neutral position, face one another enabling outflow of the pumped fluid towards the tank of the pump.

In a known solution the openings fashioned in the liner are constituted by axial millings having a size, i.e. a dimension in a circumferential direction, that is very small.

This solution arises from the need to reduce the noise level of the distributor, which is prevalently caused by cavitation phenomena which are generated during the switching of the distributor between the neutral position and one of the other two working positions.

Such a distributor is known from document JP2002087302, which discloses the preamble of the independent claim.

A known problem of this solution is that the millings are not easy to realise and lead to an increase in costs, as well as an increase in manufacturing times, in the production of the distributor.

An aim of the present invention is to obviate the above-mentioned drawbacks of the prior art, with a solution that is simple, relatively inexpensive and does not significantly worsen the noise level of the device.

The aims are attained by the characteristics of the invention as reported in the independent claim. The dependent claims delineate preferred and/or particularly advantageous aspects of the invention.

### DESCRIPTION OF THE INVENTION

The invention in particular discloses a rotary distributor for a hydraulic power-steering system, comprising: a hollow first body provided with: a cylindrical first external surface, a coaxial cylindrical first internal surface and a series of first openings passing from the first external surface to the first internal surface, and a second hollow body, coaxially and rotatably inserted internally of the first body with respect to a central axis X of the first body, provided with: a cylindrical second external surface, a cylindrical second internal surface coaxial to the second external surface, a series of second openings, each of which can face a corresponding first opening, and a pair of inclined surfaces converging towards each second opening and realised at the second external surface, in which each of the first openings of the first body is constituted by at least a cylindrical hole, being a through-hole having a constant section or a tapered section (for example discontinuous) passing from the first external surface to the first internal surface, an internal end of which opens on the cylindrical first internal surface and, for example, opens on a first external surface of the first body.

With this solution, the distributor can be obtained by means of a more rapid production process that is economical and simple with respect to the production processes for realising distributors of the prior art. Further with this solution, the distributor can have acoustic performances that are equal to if indeed not better than the known distributors.

In an aspect of the invention, each of the first openings of the first body can be constituted by a group of the constant-section cylindrical holes, in which the cylindrical holes of each group of cylindrical holes can be aligned along a parallel direction to the central axis.

In this way a first opening can be afforded having a section that is adequate for the flow of fluid in circulation, by machining the first body with rapid and economical processes.

In a further aspect of the invention, the diameter of each cylindrical hole can be comprised between 0.5 mm and 2.5 mm.

In this way an excellent compromise between the dynamic of the pumped fluid and the phenomenon of cavitation can be reached.

In a further aspect of the invention, each second opening can be constituted by an elongate slot having a longitudinal axis parallel to the central axis and faceable to all the cylindrical holes of the group of cylindrical holes defining each first opening.

In this way the machining of the second body can be realised simply and accurately.

According to the invention, the maximum distance between the inclined walls is comprised between 2 and 10 times the diameter of each cylindrical hole.

This solution provides a good balance between a simple machining of the distributor and a dynamic behaviour of the fluid that guarantees low noise levels.

The maximum radial distance between each inclined surface and an imaginary circumference containing the cylindrical second external surface (i.e. the cylindrical second external surface in contact with the first internal surface of the first body) is advantageously comprised between 0.025 mm and 0.30 mm, preferably 0.1 mm.

In this way, the outflow of fluid through the second openings is optimisable even when the first body and the second body are not in the neutral position, at the same time enabling an abatement of the noise of the distributor in this configuration too.

In a further advantageous aspect of the invention, an interaxis between the adjacent cylindrical holes of a group of cylindrical holes can be comprised between 0.5 and 3 times the diameter of a cylindrical hole.

With this solution, the machining of the distributor is simple and economical, and at the same time the distributor guarantees a dynamic behaviour of the fluid that ensures low noise levels.

The cylindrical holes (all thereof) of each group of cylindrical holes can preferably have a same diameter.

In this way the distributor can be obtained simply and economically, given a same performance.

Alternatively, two or more (or all) of the cylindrical holes of each group of cylindrical holes can have different diameters from one another.

In this way a gradual opening/closure of the through-holes constituted by the cylindrical holes can be defined.

In a further aspect of the invention, the length of each elongate slot is such as to be able to radially superpose all the cylindrical holes which define a respective first opening.

In this way, a single elongate slot defining a second opening can extend below a plurality of cylindrical holes that constitute a first opening.

### BRIEF DESCRIPTION OF THE DRAWINGS

Further characteristics and advantages of the invention will emerge from a reading of the following description, provided by way of non-limiting example with the aid of the figures illustrated in the appended tables of drawings.

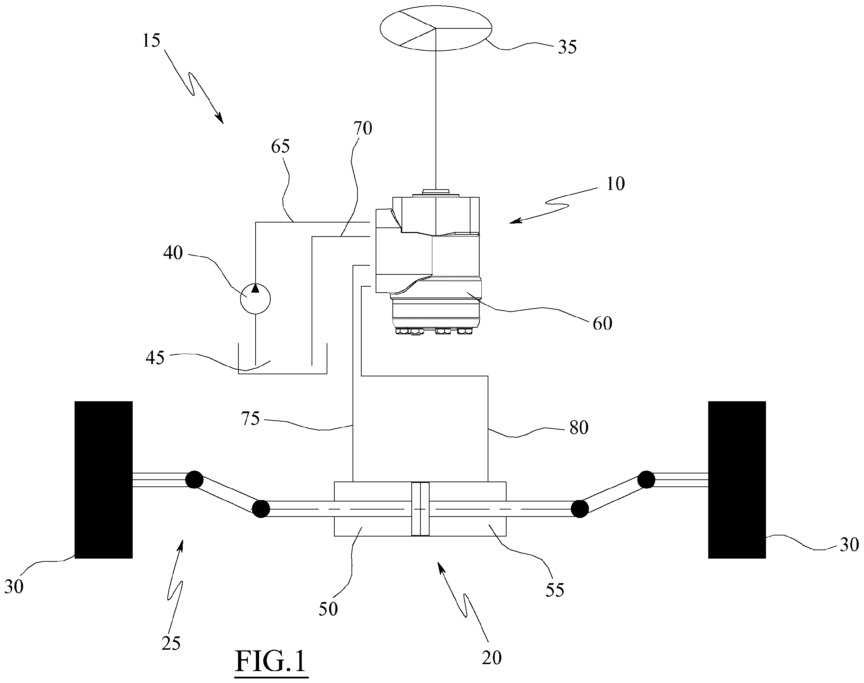

Figure 1 is a schematic representation of a hydraulic power-steering system comprising a distributor according to the invention.
Figure 2 is a lateral view of the distributor.
Figure 3 is a section view along plane A-A of the device of figure 1.
Figure 4 is a section view along plane B-B of the device of figure 1.
Figure 5 is a section view along plane C-C of the device of figure 4.
Figure 6 is a lateral view of the distributor of figure 1 in a different operating position.
Figure 7 is a section view along plane D-D of the device of figure 5.
Figure 8 is a lateral view of an alternative embodiment of the distributor according to the invention.
Figure 9 is a section view along plane E-E of the device of figure 8.

### BEST WAY OF CARRYING OUT THE INVENTION

With particular reference to the figures, reference numeral 10 relates in its entirety to a rotary distributor having an open centre for a hydraulic power-steering system 15 able to activate, by means of a hydraulic actuator 20, a steering mechanism 25 of a vehicle provided with a pair of steering wheels 30. The distributor 10 is governed, directly or by means of mechanical relays, by a steering wheel 35 activated by an operator of the vehicle.

The distributor 10 is mobile from a neutral position, in which a pressurised fluid sent by a pump 40 is directly unloaded to a tank 45 of the pump, or towards a first position, in which the pressurised fluid is sent to a first chamber 50 of the hydraulic actuator 20 for orientating the steering mechanism 25 in a direction, or towards a second position, in which the pressurised fluid is sent to a second chamber 55 of the hydraulic actuator 20 for orientating the steering mechanism 25 in the opposite direction.

The distributor 10 comprises a housing 60 in which the following are fashioned: an inlet conduit 65 for the pressurised fluid, a discharge conduit 70 communicating with the tank 45 of the pump, a first delivery conduit 75 communicating with the first chamber 50 of the hydraulic actuator 20 and a second delivery conduit 80 communicating with the second chamber 55 of the hydraulic actuator 20.

Steering in one direction or the other can be done by sending the pressurised fluid to the first delivery conduit 75 or the second delivery conduit 80.

The distributor 10 comprises a hollow first body 85, for example overall cylindrical in shape.

The first body 85 is, as known to the technical expert in the sector, sealedly housed (for example coaxially) internally of the housing 60 and is rotatably associated thereto with respect to a central axis X (longitudinal) of the first body 85.

The first body 85, for example, takes rotary motion from the rotation of the steering wheel 35, to which it is connected by means of appropriate mechanical linking members.

The first body 85 comprises, for example, in a main axial portion thereof including one of the two ends of the first body, a cylindrical first external surface 90 and a cylindrical first internal surface 95 coaxial to the first external surface 90.

The first body 85 is provided with a series z of first openings 100 which are radial through-openings (i.e. are able to place the outside of the first body 85 in communication with the inside thereof), circumferentially arranged for example equidistantly from one another.

The first openings 100 place the chamber fashioned in the housing 60 and located externally of the first body 85, which in turn communicates with the inlet conduit 65 of the pressurised fluid, in communication with an internal chamber of the first body 85.

Each first opening 100 is constituted by at least a cylindrical hole 105, in the example a plurality of cylindrical holes 105.

In the preferred embodiment the cylindrical hole 105 has a constant section along all the length thereof, i.e. for the whole thickness of the first body 80 from the first external surface 90 to the first internal surface 95 thereof.

It is possible however that each cylindrical hole 105 or some of the cylindrical holes can have a tapered section along the length thereof, i.e. for the whole thickness of the first body 80 from the first external surface 90 to the first internal surface 95 thereof (for example having a larger diameter at the first external surface 90 with respect to the diameter at the first internal surface 95). In this case, for example, the cylindrical hole 105 might be made with a discontinuous tapering, i.e. be made from a cylindrical first portion (radial) and a second portion (radial), i.e. cylindrical, consecutive to the first portion having a smaller diameter than the diameter of the first portion.

Each cylindrical hole 105 has a radial axis B with respect to the central axis X of the first body 85.

Each cylindrical hole 105 comprises an external end 110 which opens on the first external surface 90, i.e. the perimeter of which is defined by the projection of the circular section of the cylindrical hole 105 on the cylindrical first external surface 90, in other words the external end 110 is contained on the cylindrical first external surface 90.

Each cylindrical hole 105 comprises an internal end 115 which opens on the first internal surface 95, i.e. the perimeter of which is defined by the projection of the circular section of the cylindrical hole 105 on the cylindrical first internal surface 95, in other words the internal end 115 is contained on the cylindrical first internal surface 95.

In practice, each cylindrical hole 105 extends radially from the cylindrical first external surface 90 to the cylindrical first internal surface 95.

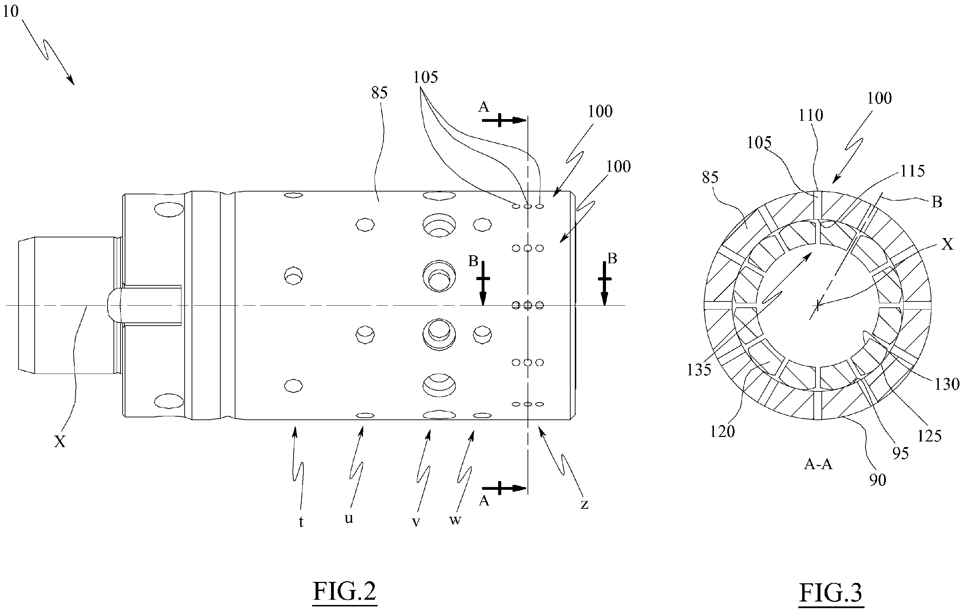

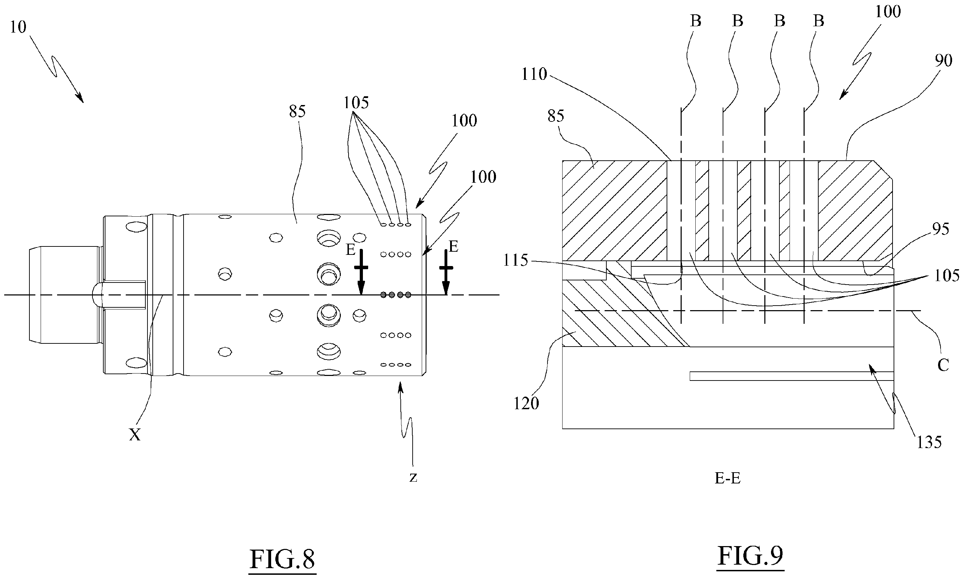

Each of the first openings 100 of the first body 85 is constituted by a group of the cylindrical holes 105 aligned along a parallel direction to the central axis X, i.e. the axes B of which all lie on a (radial) plane containing the central axis X. For example, each group of cylindrical holes 105 is constituted by 2 or more cylindrical holes 105, for example 3 in number (as shown in figures 2-7), 4 in number (as shown in figures 8 and 9) or 5 or more in number.

The cylindrical holes 105 of each group can be equidistanced from one another; the distance between two adjacent cylindrical holes 105, to be understood as the interaxis between the cylindrical holes 105, is comprised between 0.5 and 3 times the diameter of a cylindrical hole 105, preferably equal to 1.5 times the diameter of the cylindrical hole 105 (whether they are equidistant from one another or have different reciprocal distances).

The diameter of each cylindrical hole 105 is comprised between 0.5 mm and 2.5 mm, and is preferably 1.5 mm.

In a first embodiment, illustrated in figures from 2 to 7, the series z of first openings 100 comprises twelve (equidistant) first openings 100, each formed by a group of three cylindrical holes 105.

In a second embodiment, illustrated in figures from 8 to 9, the series z of first openings 100 comprises twelve first openings 100, each provided with a group of four cylindrical holes 105.

The first body 85 is also provided with a further (four) series t, u, v, w of circumferential openings, which will not be described in detail as they are of a type known to the expert in the sector.

The distributor 10 comprises a second hollow body 120, for example having an overall cylindrical shape.

The second body 120 is coaxially inserted, sealedly as known to the technical expert in the sector, internally of the first body 85, i.e. internally of the cylindrical cavity thereof.

The second body 120 is rotatably (or at least oscillatingly) associated to the first body 85 about the central axis X of the first body 85.

Means of known type are interposed between the first body 85 and the second body 120 for limiting the reciprocal rotation between the bodies in permitted oscillations, and for (elastically) pushing the second body 120 into predetermined angular positions with respect to the first body 85 (as will more fully emerge from the following description).

The second body 120, for example, takes rotary motion from the rotation of the steering wheel 35, to which it is connected by means of appropriate mechanical linking members and, for example, transfers the motion to the first body 85 via the said means (as known to the technical expert in the sector). The second body 120 comprises, for example in a main axial portion including one of the two ends of the second body, a cylindrical second external surface 125 and a cylindrical second internal surface 130 coaxial to the second external surface 125.

The second external surface 125 of the second body 120 is substantially snugly housed internally of the first body 85, i.e. internally of the first internal surface 95 thereof.

The second external surface 125 of the second body 120 is, in practice, in dragging contact with the first internal surface 95 of the first body 85 during the reciprocal rotation of the second body 120 with respect to the first body 85. The second body 120 is provided with a series of second openings 135 which are radial through-openings (i.e. are able to place the outside of the second body 120 in communication with the inside thereof), circumferentially arranged for example equidistantly from one another.

The reciprocal distance (circumferential) between the first openings 100 of the first body 85 is preferably equal to the reciprocal distance (circumferential) between the second openings 135 of the second body 120, i.e. each of the second openings 135 of the second body 120 is faceable (alignable in a radial direction) to a single respective first opening 100.

Each second opening 135 is constituted by an elongate slot having a longitudinal axis C that is parallel to the central axis X of the first body 85, which coincides with the central axis of the second body 120.

For example, the elongate slot defining each second opening 135 has a longitudinal end that is open at an end of the second body 120 and an opposite longitudinal end that is closed, though it is possible that both the longitudinal ends of the elongate slot defining each second opening 135 can be closed.

For example, each second opening 135 is obtained by milling.

The elongate slot defining each second opening 135 has a pair of opposite parallel walls 140 which circumferentially delimit the respective second opening 135.

The parallel walls 140, in practice, lie on parallel planes to the median radial plane (which contains the central axis X) of the second opening 135.

Each second opening 135 has a longitudinal length equal to or longer than the length in the same direction as the corresponding first opening 100 of the first body 85 (taking as the length of the first opening 100 the distance between the end points of the cylindrical end holes 105 of each group of cylindrical holes 105).

The second body 120 comprises a pair of inclined surfaces 145 converging towards each second opening 135, which are realised at the second external surface 125.

Each inclined surface 145 flanks the respective second opening 135 for the whole longitudinal extension thereof.

The inclined surfaces 145 are symmetrical with respect to a median radial plane of the second opening 135.

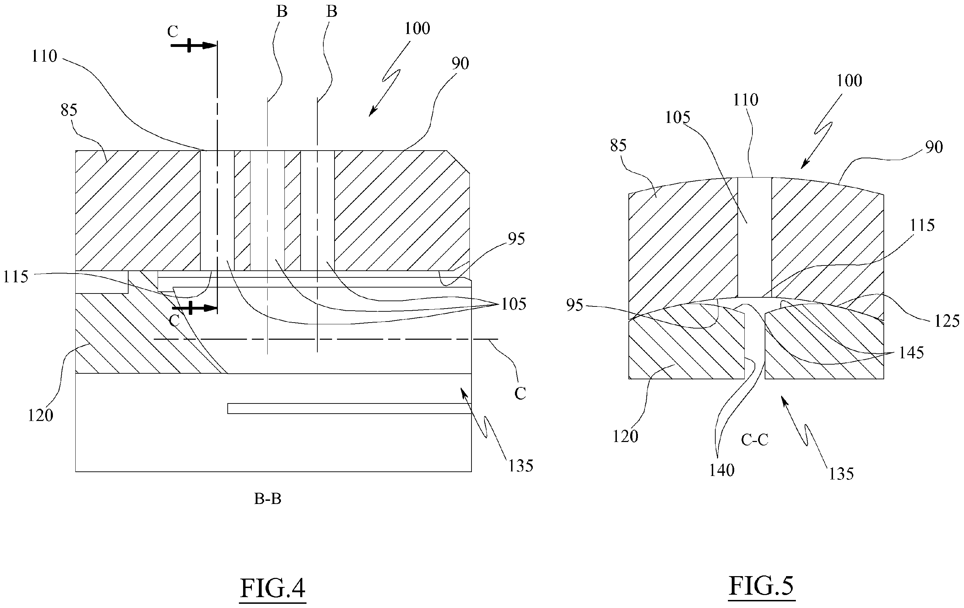

The inclined surfaces 145 can for example be constituted, as can be observed in figure 5, by a pair of curved surfaces having convexities facing towards the outside of the second body 120, i.e. facing, in use, towards the first internal surface 95 of the first body 85.

Each inclined surface 145 connects (towards the inside) with a respective parallel wall 140 and (towards the outside) with a cylindrical portion of the second external surface 125 (in dragging contact with the first internal surface 95 of the first body 85).

In practice, the inclined surfaces 145 of each second opening 135 define an entry portion at the second opening.

The maximum radial distance between each inclined surface and an imaginary circumference containing the cylindrical second external surface 125 of the second body 120 (i.e. the cylindrical second external surface 125 in contact with the first internal surface 95 of the first body 85) is comprised between 0.025 mm and 0.30 mm, preferably 0.1 mm.

The maximum (circumferential) distance between the inclined surfaces 145 of each pair of inclined surfaces 145, i.e. the distance between the connecting surfaces (external) between the inclined surfaces and the cylindrical portion of the second external surface 125, is greater than the diameter of the cylindrical hole 105.

According to the invention the maximum distance between the inclined surfaces 145 is comprised between 2 and 10 times the diameter of the cylindrical hole 105.

The minimum (circumferential) distance between the inclined surfaces 145 of each pair of inclined surfaces 145, i.e. the distance between the connecting surfaces (internal) between the inclined surfaces and the respective parallel wall 140 of the second opening 135 (i.e. the distance between the parallel walls) is smaller than the diameter of the cylindrical hole 105.

For example, the minimum distance between the inclined surfaces 145 is comprised between 0.5 and 1.5 times the diameter of the cylindrical hole 105. This solution provides a good balance between a simple machining of the distributor and a dynamic behaviour of the fluid that guarantees low noise levels.

The internal volume of the second body 120 (i.e. the internal cavity thereof delimited by the second internal surface 130) is in fluid communication with the discharge conduit 70, so that the inlet conduit 65 can be placed in fluid communication with the discharge conduit 70 when (all) the first openings 100 of the first body 85, i.e. each cylindrical hole 105, are aligned with the respective second opening 135 of the second body 120.

For example, the second body 120 is mobile internally of the first body 85, i.e. rotatably mobile, between a neutral position, in which each second opening 135 is aligned (radially) to a corresponding first opening 100, i.e. the axes B of the cylindrical holes 105 of each group of cylindrical holes 105 lie substantially on the median radial plane of the corresponding second opening 135, and a steering position, in which each second opening 135 is dealigned (radially) with respect to a corresponding first opening 100, i.e. the axes B of the cylindrical holes 105 of each group of cylindrical holes 105 lie substantially incident to the median radial plane of the corresponding second opening 135.

For example, the above-mentioned means (of known type) for limiting the reciprocal rotation between the first body 85 and the second body 120 in contained oscillations are configured for reciprocally and elastically pushing the second body 120 and the first body 85 towards the neutral position from any steering position (right or left) when the steering wheel 35 is stationary in any angular position.

The functioning of the distributor 10 of the invention is as follows.

When the steering wheel 35 is stationary in any angular position the first body 85 and the second body 120 are in the neutral position, the second openings 135 are in fluid communication with the corresponding first openings 100, i.e. the cylindrical holes 105 they are constituted by, enabling recycling of the fluid coming from the pump 40 towards the tank 45.

In practice, in this configuration, the fluid enters the housing 60 through the inlet conduit 65, radially crosses the first openings 100 of the first body 85, enters the entry portions delimited circumferentially by the inclined surfaces 145 (in the gap between the first body 85 and the second body 120) and, from there, is pushed to cross the second openings 135 so as to exit the housing 60 through the discharge conduit 70 communicating with the internal cavity of the second body 120.

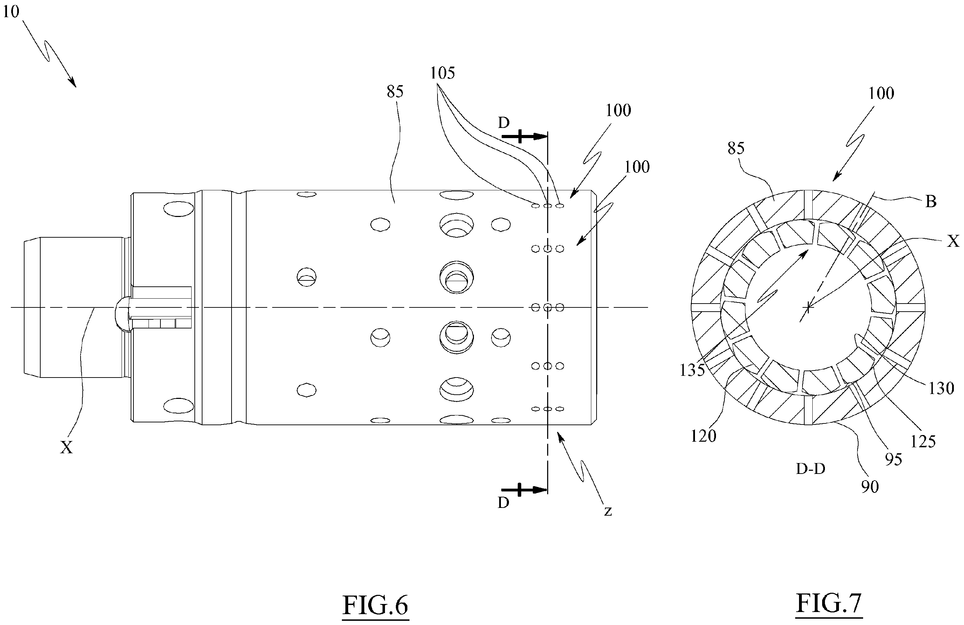

Further, in this configuration the first delivery conduit 75 and the second delivery conduit 80 are in fact by-passed so that the hydraulic actuator 20 remains in a stationary configuration (centred or any steered position). When the steering wheel 35 is activated in rotation the first body 85 and the second body 120 move into a steered position (i.e. for controlling the steering). In practice, the first openings 100 and the second openings 135 are angularly staggered, as illustrated in figure 6 and 7, and at least a part of the fluid is directed through the series t, u, v, w of circumferential openings (due to increase of the load loss through the staggered passages between the second openings 135 and the first openings 100) towards the first delivery conduit 75 or the second delivery conduit 80 according to the rotation direction imparted on the steering wheel 35, for activating the hydraulic actuator 20 and carrying out the steering in one direction or the other.

## Claims

1. A rotary distributor (10) for a hydraulic power-steering system (15), comprising:
- a hollow first body (85) provided with: a cylindrical first external surface (90), a coaxial cylindrical first internal surface (95) and a series (z) of first openings (100) passing from the first external surface (90) to the first internal surface (95), and
- a second hollow body (120), coaxially and rotatably inserted internally of the first body (85 with respect to a central axis (X) of the first body (85), provided with: a cylindrical second external surface (125), a cylindrical second internal surface (130) coaxial to the second external surface (125), a series of second openings (135), each of which faces a corresponding first opening (100), and a pair of inclined surfaces (145) converging towards each second opening (135) and realised at the second external surface (125),
wherein each of the first openings (100) of the first body (85) is constituted by at least a cylindrical hole (105) passing from the first external surface (90) to the first internal surface (95) of the first body (85) and an internal end (115) of which opens on the cylindrical first internal surface (95),
**characterised in that** the maximum distance between the inclined surfaces (145) is comprised between 2 and 10 times the diameter of each cylindrical hole (105).

2. The distributor (10) of claim 1, wherein each of the first openings (100) of the first body (85) is constituted by a group of the cylindrical holes (105) having a constant section, wherein the cylindrical holes (105) of each group of cylindrical holes (105) are aligned along a parallel direction to the central axis (X).

3. The distributor (10) of claim 1 or 2, wherein the cylindrical hole (105) has a constant section along all the thickness of the first body (85) from the first external surface (90) to the first internal surface (95) thereof and has an external end which opens on the first external surface (90) of the first body (80).

4. The distributor (10) of claim 1 or 2, wherein the cylindrical hole (105) has a tapered section along the thickness of the first body (85) from the first external surface (90) to the first internal surface (95) thereof and has an external end which opens on the cylindrical first external surface (90) of the first body (80).

5. The distributor (10) of claim 1 or 2, wherein the diameter of each cylindrical hole (105) is comprised between 0.5 mm and 2.5 mm.

6. The distributor (10) of claim 2, wherein each second opening (135) is constituted by an elongate slot having a longitudinal axis (C) parallel to the central axis (X) and faceable to all the cylindrical holes (105) of the group of cylindrical holes (105) defining each first opening (100).

7. The distributor (10) of claim 1, wherein the maximum radial distance between each inclined surface (145) and an imaginary circumference containing the cylindrical second external surface (125) is comprised between 0.025 mm and 0.30 mm, preferably 0.1 mm.

8. The distributor (10) of claim 2, wherein an interaxis between the adjacent cylindrical holes (105) of a group of cylindrical holes (105) is comprised between 0.5 and 3 times the diameter of a cylindrical hole (105).

9. The distributor (10) of claim 2, wherein the cylindrical holes (105) of each group of cylindrical holes (105) have a same diameter.

10. The distributor (10) of claim 2, wherein two or more of the cylindrical holes (105) of each group of cylindrical holes (105) have different diameters.

## Patentansprüche

1. Drehverteiler (10) für ein hydraulisches Servolenkungssystem (15), umfassend:
einen hohlen ersten Körper (85), der mit Folgendem versehen ist: einer zylindrischen ersten Außenfläche (90), einer koaxialen zylindrischen ersten Innenfläche (95) und einer Reihe (z) von ersten Öffnungen (100), die von der ersten Außenfläche (90) zu der ersten Innenfläche (95) verlaufen, und
einen zweiten hohlen Körper (120), der koaxial und drehbar innerhalb des ersten Körpers (85) in Bezug auf eine Mittelachse (X) des ersten Körpers (85) eingesetzt ist, der mit Folgendem versehen ist: einer zylindrischen zweiten Außenfläche (125), einer zylindrischen zweiten Innenfläche (130) koaxial zu der zweiten Außenfläche (125), einer Reihe von zweiten Öffnungen (135), von denen jede einer entsprechenden ersten Öffnung (100) zugewandt ist, und einem Paar von geneigten Oberflächen (145), die zu jeder zweiten Öffnung (135) zusammenlaufen und an der zweiten Außenfläche (125) ausgeführt sind,
wobei jede der ersten Öffnungen (100) des ersten Körpers (85) aus mindestens einem zylindrischen Loch (105) besteht, das von der ersten Außenfläche (90) zu der ersten Innenfläche (95) des ersten Körpers (85) verläuft, und wovon sich ein inneres Ende (115) auf der zylindrischen ersten Innenfläche (95) öffnet,
**dadurch gekennzeichnet, dass** der maximale Abstand zwischen den geneigten Oberflächen (145) zwischen dem 2- und 10-fachen des Durchmessers von jedem zylindrischen Loch (105) liegt.

2. Verteiler (10) nach Anspruch 1, wobei jede der ersten Öffnungen (100) des ersten Körpers (85) aus einer Gruppe der zylindrischen Löcher (105) mit einem konstanten Querschnitt besteht, wobei die zylindrischen Löcher (105) jeder Gruppe von zylindrischen Löchern (105) entlang einer parallelen Richtung zur Mittelachse (X) ausgerichtet sind.

3. Verteiler (10) nach Anspruch 1 oder 2, wobei das zylindrische Loch (105) einen konstanten Querschnitt entlang der gesamten Stärke des ersten Körpers (85) von der ersten Außenfläche (90) zu der ersten Innenfläche (95) davon aufweist und ein äußeres Ende aufweist, das sich an der ersten Außenfläche (90) des ersten Körpers (80) öffnet.

4. Verteiler (10) nach Anspruch 1 oder 2, wobei das zylindrische Loch (105) einen konischen Abschnitt entlang der Stärke des ersten Körpers (85) von der ersten Außenfläche (90) zu der ersten Innenfläche (95) davon aufweist und ein äußeres Ende aufweist, das sich an der zylindrischen ersten Außenfläche (90) des ersten Körpers (80) öffnet.

5. Verteiler (10) nach Anspruch 1 oder 2, wobei der Durchmesser von jedem zylindrischen Loch (105) zwischen 0,5 mm und 2,5 mm liegt.

6. Verteiler (10) nach Anspruch 2, wobei jede zweite Öffnung (135) aus einem länglichen Schlitz mit einer Längsachse (C) parallel zur Mittelachse (X) besteht und allen zylindrischen Löchern (105) der Gruppe von zylindrischen Löchern (105), die jede erste Öffnung (100) definieren, zugewandt sein kann.

7. Verteiler (10) nach Anspruch 1, wobei der maximale radiale Abstand zwischen jeder geneigten Oberfläche (145) und einem imaginären Umfang, der die zylindrische zweite Außenfläche (125) beinhaltet, zwischen 0,025 mm und 0,30 mm, vorzugsweise 0,1 mm, liegt.

8. Verteiler (10) nach Anspruch 2, wobei eine Zwischenachse zwischen den benachbarten zylindrischen Löchern (105) einer Gruppe von zylindrischen Löchern (105) zwischen dem 0,5- und 3-fachen Durchmesser eines zylindrischen Lochs (105) liegt.

9. Verteiler (10) nach Anspruch 2, wobei die zylindrischen Löcher (105) jeder Gruppe von zylindrischen Löchern (105) einen gleichen Durchmesser aufweisen.

10. Verteiler (10) nach Anspruch 2, wobei zwei oder mehrere der zylindrischen Löcher (105) jeder Gruppe von zylindrischen Löchern (105) unterschiedliche Durchmesser aufweisen.

## Revendications

1. Distributeur rotatif (10) pour un système de direction assistée hydraulique (15) comprenant:
- un premier corps creux (85) doté : d'une première surface externe (90) cylindrique, d'une première surface interne (95) cylindrique et coaxiale, ainsi que d'une série (z) de première ouvertures (100) passant de la première surface externe (90) à la premier surface interne (95), et
- un second corps creux (120), inséré de façon coaxiale et rotative à l'intérieur du premier corps (85) selon un axe central (X) du premier corps (85), doté : d'une seconde surface externe (125) cylindrique, d'une seconde surface interne (130) cylindrique et coaxiale à la seconde surface externe (125), d'une série de seconde ouvertures (135), chacune orientée vers une première ouverture (100) correspondante, ainsi que d'une paire de surfaces inclinées (145) convergeant vers chaque seconde ouverture (135) et réalisée sur la seconde surface externe (125), dans lequel chacune des première ouvertures (100) du premier corps (85) est constituée d'au moins un trou cylindrique (105) passant de la première surface externe (90) à la première surface interne (95) du premier corps (85) et une extrémité interne (115) de ce dernier s'ouvre sur la première surface interne (95) cylindrique,
**caractérisé en ce que** la distance maximale entre les surfaces inclinées (145) est une valeur comprise entre 2 et 10 fois le diamètre de chaque trou cylindrique (105).

2. Distributeur (10) selon la revendication 1, dans lequel chacune des première ouvertures (100) du premier corps (85) est constituée d'un groupe de trous cylindriques (105) disposant d'une section constante, dans laquelle les trous cylindriques (105) de chaque groupe de trous cylindriques (105) sont alignés le long d'une direction parallèle à l'axe central (X).

3. Distributeur (10) selon la revendication 1 ou 2, dans lequel le trou cylindrique (105) possède une section constante le long de toute l'épaisseur du premier corps (85) de la première surface externe (90) à la première surface interne (95) de ce dernier et possède une extrémité externe qui s'ouvre sur la première surface externe (90) du premier corps (80).

4. Distributeur (10) selon la revendication 1 ou 2, dans lequel le trou cylindrique (105) possède une section conique le long de l'épaisseur du premier corps (85) de la première surface externe (90) à la première surface interne (95) de ce dernier et possède une extrémité externe qui s'ouvre sur la première surface externe (90) cylindrique du premier corps (80).

5. Distributeur (10) selon la revendication 1 ou 2, dans lequel le diamètre de chaque trou cylindrique (105) est compris entre 0,5 et 2,5 mm.

6. Distributeur (10) selon la revendication 2, dans lequel chaque seconde ouverture (135) est constituée d'une fente allongée disposant d'un axe longitudinal (C) parallèle à l'axe central (X) et orientable vers tous les trous cylindriques (105) du groupe de trous cylindriques (105) délimitant chaque première ouverture (100).

7. Distributeur (10) selon la revendication 1, dans lequel la distance radiale maximale entre chaque surface inclinée (145) et une circonférence imaginaire contenant la seconde surface externe (125) cylindrique est comprise entre 0,025 et 0,30 mm, de préférence 0,1 mm.

8. Distributeur (10) selon la revendication 2, dans lequel un entraxe entre les trous cylindriques (105) adjacents d'un groupe de trous cylindriques (105) est compris entre 0,5 et 3 fois le diamètre d'un trou cylindrique (105).

9. Distributeur (10) selon la revendication 2, dans lequel les trous cylindriques (105) de chaque groupe de trous cylindriques (105) possèdent le même diamètre.

10. Distributeur (10) selon la revendication 2, dans lequel deux ou plusieurs des trous cylindriques (105) de chaque groupe de trous cylindriques (105) possèdent des diamètres différents.
